# EUROPEAN PATENT APPLICATION

(11) **EP 2 706 528 A2**
(43) Date of publication of application: **12.03.2014**
(21) Application number: 13179277.2
(22) Date of filing: 05.08.2013
(51) Int. Cl.: G10L 13/06, G10L 15/26, G10L 19/00

(54) **System and method to generate a narrator specific acoustic database without a predefined script**

(30) Priority: 11.09.2012 US 201213609756
(71) Applicant: Delphi Technologies, Inc., Troy MI 48007 (US)
(72) Inventor: Hedges, Christopher A., Greentown, IN 46936 (US); Coon, Bradley S., Russiaville, IN 46979 (US)
(74) Representative: Neill, Andrew Peter

(57) **Abstract**

A system (10) and method (300) for generating an acoustic database for a particular narrator (22) that does not require said narrator (22) to recite a pre-defined script. The system (10) and method (300) generate an acoustic database by using voice recognition or speech-to-text algorithms to automatically generate a text script of a voice message while simultaneously or near-simultaneously sampling the voice message to create the acoustic database. The acoustic database may be associated with the narrator (22) of the voice message by an identifier, such as a telephone number. The acoustic database may then be used by a text-to-speech processor to read a text message when the narrator (22) is identified as the sender of the text massage, providing an audio output (38) of the contents of the text message with a simulation of the sender's voice. The user (12) of the system (10) may be provided an audio message that sounds like the originator of the text message.

## Description

### TECHNICAL FIELD OF INVENTION

The invention generally relates to generating an acoustic database for use with a text-to-speech processor, and more particularly relates to generating a narrator specific acoustic database without a predefined script.

### BACKGROUND OF INVENTION

Text-To-Speech (TTS) processors are used in variety of products to convert textual information into a synthesized voice output. Such systems allow humans to process textual data when a visual interface is not possible, inconvenient, or unsafe. One appropriate use of TTS is a system to read and speak text messages such as mobile phone SMS (Short Message Service) messages to the user versus requiring them to physically (optically) read the text. This is particular useful when the user is driving a vehicle as many government agencies and entities have enacted laws to restrict "texting" while driving.

Typical TTS systems utilize an acoustic database containing sounds that are sliced and organized into diaphones, syllables, morphemes, words, phrases, and sentences. The creation of this acoustic database usually requires hours of scripted speech recordings. Additionally, a device using a TTS processor, such as a cellular telephone with short message service (SMS), may offer a choice of different "voices". Each voice is associated with an acoustic database created from a recording session by a different person usually unknown to the listener, i.e. a stranger. The user of the device may not be able to recognize the identity of the sender of a text-based message by listening to the audio generated by a TTS processor using this acoustic database. It may be desirable to present the content of a text message to the user of the TTS processor using a simulation of the sender's voice generated by the TTS processor using a personalized acoustic database. However, it is impractical to require each text message sender to record and provide a personalized acoustic database in advance of sending a text message.

### SUMMARY OF THE INVENTION

Described herein are systems and methods for generating an acoustic database that does not require a narrator, i.e. the person whose voice is used to create the acoustic database, to read a pre-defined script. The systems and methods described are also capable of determining the identity of the narrator so that acoustic data is stored in a database associated with the narrator and so that the acoustic database for the narrator is used by a text-to-speech processor when a text-based message is received from the narrator.

In accordance with one embodiment of this invention, method of generating an acoustic database for a particular narrator that does not require the narrator to recite a pre-defined script is provided. The method includes the steps of analyzing a speech sample of the narrator effective to identify a word within the speech sample, determining a text string corresponding to the word, generating an acoustic datum based on the text string and the word, and storing the acoustic datum in the acoustic database for the narrator.

The method may also include the steps of receiving the speech sample via a voice channel of a communication system and identifying the narrator with a first identifier received from the voice channel.

The method may further include the steps of receiving a text communication via a data channel of the communication system, identifying the narrator with a second identifier received from the data channel, and processing the text communication using the acoustic database for the narrator, effective to generate a synthesized speech message based on the text communication that simulates the voice of the narrator.

The method may additionally include the steps of determining a confidence level for the word that is indicative of an estimated level of accuracy for which the text string is determined from the speech sample and discarding the word when the confidence level is below a confidence threshold, such that the acoustic datum based on the text string and the word are not stored in the acoustic database.

The first identifier and the second identifier may comprise a telephone number. The communication system may be a cellular telephone network. The voice channel may be characterized as a duplex channel having a send direction and a receive direction. The speech sample may be recorded from the receive direction of the voice channel. The speech sample may be analyzed by a speaker-independent speech-to-text processor. The acoustic datum may comprise at least one of diphones, allophones, and triphones.

In another embodiment of the present invention, a speech processing system configured to generate an acoustic database for a particular narrator without the narrator reciting a pre-defined script is provided. The system includes a controller that is configured to analyze a speech sample of the narrator effective to identify a word within the speech sample, determine a text string corresponding to the word, generate an acoustic datum based on the text string and the word, and store the acoustic datum in the acoustic database for the narrator. The controller may also be configured to determine a confidence level for the word that is indicative of an estimated level of accuracy for which the text string is determined from the speech sample and discard the word when the confidence level is below a confidence threshold, such that the acoustic datum based on the text string and the word are not stored in the acoustic database.

The system may further include a transceiver configured to receive the speech sample via a voice channel of a communication system. The controller may be configured to identify the narrator with a first identifier received from the voice channel. The transceiver may also be configured to receive a text communication via a data channel of the communication system. The controller may be configured to identify the narrator with a second identifier received from the data channel and process the text communication using the acoustic database for the narrator, effective to generate a synthesized speech message based on the text communication that simulates the voice of the narrator. The controller may be characterized as a speaker-independent speech-to-text processor.

The first identifier and the second identifier may comprise a telephone number. The transceiver may be a cellular telephone transceiver and the communication system may be a cellular telephone network. The voice channel may be characterized as a duplex channel having a send direction and a receive direction. The speech sample may be recorded from the receive direction of the voice channel. The acoustic datum may comprise at least one of diphones, allophones, and triphones.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a speech processing system in accordance with one embodiment;
Fig. 2 is a diagram of a controller configured for use in a speech processing system in accordance with one embodiment;
Fig. 3 is flow chart of a method of generating an acoustic database in accordance with one embodiment;
Figs. 4A and 4B are a flow chart of a method to create and update an acoustic database from a voice message received by a transceiver in accordance with one embodiment;
Fig. 5 is a flow chart of a method to create and update an acoustic database from in-vehicle command and control recognition in accordance with one embodiment; and
Fig. 6 is a flow chart of a method to provide a personalized voice for an incoming text message in accordance with one embodiment.

### DETAILED DESCRIPTION OF INVENTION

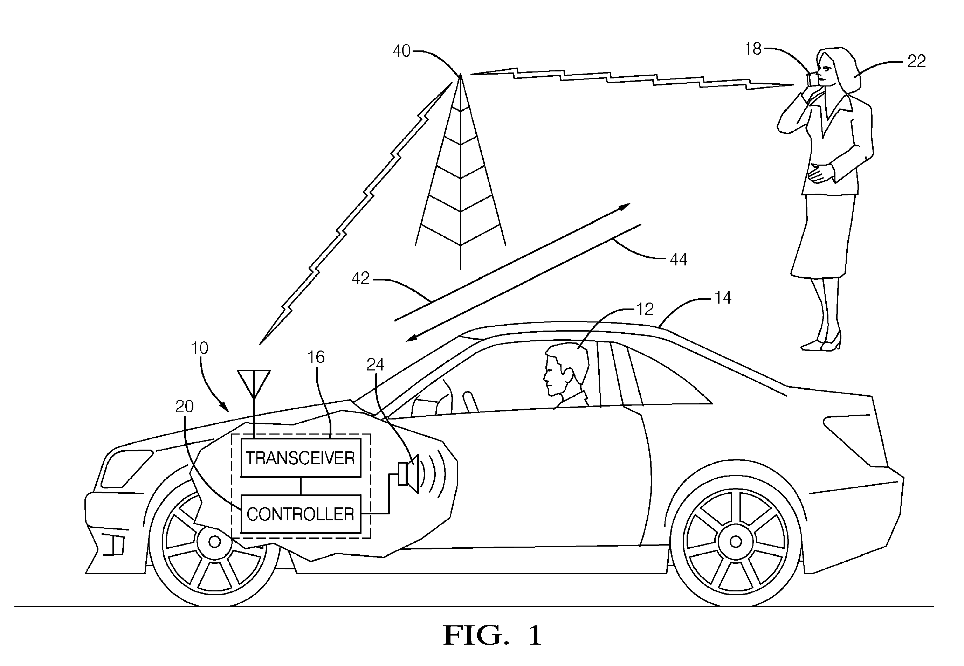

Fig. 1 illustrates a non-limiting example of a speech processing system 10 configured to generate an acoustic database for a particular narrator without the narrator reciting a pre-defined script. The speech processing system 10 in this example is configured to read incoming text messages to a driver 12 of a vehicle 14. The system 10 may include a transceiver 16, such as a cellular telephone, configured to receive voice messages (e.g. telephone calls) and text messages from another transceiver 18, such as another cellular telephone, that is remote from the vehicle 14. The system 10 also includes a controller 20 that is configured to generate an acoustical database for a particular narrator 22, e.g. a person on a telephone call, by processing the incoming audio using voice recognition algorithms to automatically generate a script while simultaneously or near-simultaneously sampling the audio to create an acoustic datum to be stored in the acoustic database. This may provide the advantage of generating an acoustic database for the narrator 22 without the need to use a pre-defined script.

By way of example and not limitation, when the transceiver 16 receives an incoming text message, the controller 20 may use the acoustic database with a text-to-speech processor to convert text message into an audio message that is played over a loudspeaker 24 in the vehicle 14 so that the audio message may be heard by the driver 12, allowing "eyes-free" receipt of a text message in the vehicle 14. The system 10 may be configured to generate a separate acoustic database for a number of different narrators, for instance for every person listed in a contact database stored within the controller 20. Then, when a text message is received from a person listed in the contact database, the controller 20 may use the acoustic database associated with that narrator to process the text message. By using the acoustic database associated with the narrator 22, the text-to-speech processor in the controller 20 will generate an audio message that simulates the voice of the narrator 22. This may provide an advantage of providing the content of the text message in a voice familiar to the driver 12. The driver 12 may also be able to identify the sender of the text message by the sound of the voice used to read the text message.

While the speech processing system 10 in the preceding example is shown as being installed in a vehicle 14, it is recognized that the system 10 may be used independently of a vehicle 14. As non-limiting examples, the system 10 may be incorporated into a cellular telephone, personal computer, or other electronic device that may use an acoustic database. Alternatively, the speech processing system 10 may not include a transceiver 16 and the controller 20 may generate the acoustic database for the narrator 22 from an audio input, such as a microphone used by the narrator or an audio recording of the narrator.

As used herein, an acoustic database contains speech units such as diphones, triphones, or allophones collected from a particular narrator or speaker for particular text strings. Also, as used herein, the narrator 22 is the person whose voice is sampled and stored in the acoustic database and whose voice may be simulated by a text-to-speech processor using the acoustic database.

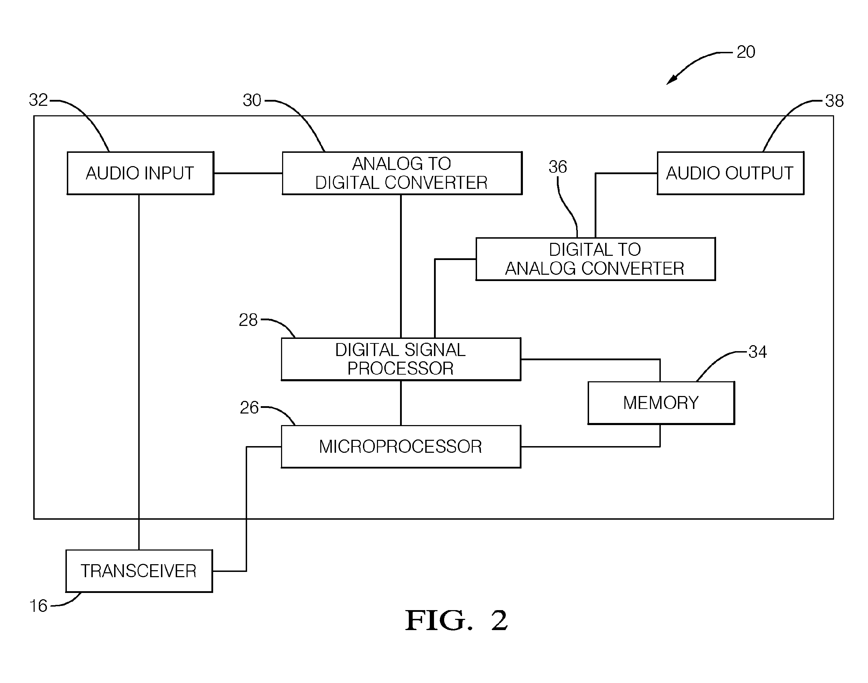

Fig. 2 illustrates a non-limiting example of the controller 20 for the speech processing system 10 that uses voice recognition algorithms to automatically generate a text script of an incoming voice message while simultaneously or near-simultaneously sampling the voice message to create the acoustic database. The controller 20 may include a microprocessor 26 or application specific integrated circuit (ASIC) configured to control the system 10. The microprocessor 26 may include digital signal processing (DSP) 28 circuitry or the controller 20 may comprise a separate DSP 28 integrated circuit. The controller 20 may also include analog to digital (A/D) convertor 30 circuits that allow the DSP 28 to establish electrical communication with an audio input 32 circuit that is configured to interface the DSP 28 with a microphone or other means of electronically capturing the speech sample of the narrator 22.

Software that configures the microprocessor 26 or ASIC to control the system 10 may be stored in non-volatile (NV) memory 34 within the controller 20. Non-limiting examples of the types ofNV memory that may be used include electrically erasable programmable read-only memory (EEPROM), masked read-only memory (ROM) and flash memory. The software stored within the controller 20 may include a speech-to-text processor that includes instructions that, when executed, cause the controller 20 to identify a word within the speech sample and determine a text string corresponding to the word. This software may contain voice recognition algorithms such as Dragon produced by Nuance, 1 Wayside Road, Burlington, Massachusetts 01803.

The software stored within the controller 20 may also include instructions that, when executed, cause the controller 20 to generate an acoustic datum based on the text string and the word and store the acoustic datum in the acoustic database for the narrator 22. The acoustic database may also be stored in the memory 34 within the controller 20. The acoustic datum may be a portion of the speech sample and the text string or a portion of the speech sample and a fragment of the text string. The analysis of the speech sample required to determine the text string may be performed by the DSP 28.

Numerous different speech samples from the narrator 22 may be required to build an acoustic database that can support text-to-speech processing to synthesize an audio signal that sufficiently simulates the voice of the narrator 22. The speech samples may be collected by the system 10 through direct entry, i.e. the narrator 22 speaking directly to a microphone connected to the system 10 or the speech samples may be collected indirectly, i.e. from a recording of the narrator or from a communication device, such as a telephone, used by the narrator 22. It is also contemplated that the transceiver 16 could be equipped with features similar to the controller 20 so that the transceiver 16 could automatically build an acoustic database as the narrator 22 used the transceiver 16. The acoustic database could then be transferred to the controller 20 by way of, for example, a data request sent by the controller 20 to the transceiver 16.

The controller 20 may be configured to store a plurality of acoustic databases associated with a plurality of narrators. Preferably, the acoustic data for each narrator is stored in a unique acoustic database.

The controller 20 may be characterized as including a speaker-independent speech-to-text processor. As used herein, a speaker-independent speech-to-text processor describes a processor that does not require preexisting data regarding the narrator 22 (e.g. voice training) in order to recognize words contained in the speech sample of the narrator 22.

The software stored within the controller 20 may include a text-to-speech (TTS) processor that includes instructions that, when executed, cause the controller 20 generate an audio signal based on an incoming text message using the acoustic database for a particular narrator. This software may contain text-to-speech algorithms such as CereVoice produced by CereProc, Ltd., 11 Crichton Street, Edinburgh, EH8 9LE, United Kingdom.

The controller 20 may also include digital to analog (D/A) convertor 36 circuits that allow the DSP 28 to establish electrical communication with an audio output 38 circuit that is configured to interface the DSP 28 with the loudspeaker 24 or other means of electronically outputting the audio signal.

Referring again to Fig. 1, the transceiver 16 is configured to receive the speech sample of the narrator 22 via a voice channel of a communication system 40. The transceiver 16 may comprise a telephone transceiver, a cellular telephone transceiver, and/or a computer network interface transceiver. The communication system 40 may be a telephone network, a cellular telephone network, internet-based communication network, such as voice over internet protocol (VoIP), and/or another electronic communication network. The controller 20 may be configured to identify the narrator 22 with a first identifier received from the voice channel. The first identifier may comprise a numeric identifier such as a telephone number or IP address, a text identifier, such as a user name, or another electronic identifier, such as a unique electronic signal or waveform.

As illustrated in Fig. 1, the voice channel may be characterized as a duplex channel having a send direction 42 and a receive direction 44, as referenced relative to the transceiver 16. As a non-limiting example, the speech sample may be captured from the receive direction 44 of the voice channel in order to analyze the speech sample of the narrator 22. Alternatively, the speech sample may be captured from the send direction 42 of the voice channel in order to analyze the speech of the driver 12. Alternatively, the voice channel may be characterized as a simplex channel having only a receive direction 44 such as a microphone configured to interface with a voice command system such as a such as a voice controlled audio system or navigation system.

The transceiver 16 may also be configured to receive a digital data communication, such as a short message service (SMS) text message or e-mail via a data channel of the communication system 40. The controller 20 may be configured to identify the narrator 22 with a second identifier received from the data channel. The second identifier may comprise a numeric identifier such as a telephone number or IP address, a text identifier, such as a user name, or an electronic identifier, such as a unique electronic signal or waveform.

The controller 20 may be further configured to process the text communication using the text-to-speech processor and the acoustic database for the narrator 22, effective to generate a synthesized speech message based on the text communication that simulates the voice of the narrator 22. The speech message is presented to a user of the system 10, such as the driver 12, as an audio signal.

The controller 20 may be configured to store a plurality of first identifiers and second identifiers in a contact database within the memory 34. A particular first identifier and/or a particular second identifier may be associated with a particular acoustic database. The first identifier may be used to identify the narrator 22 when an incoming voice message is received by the controller 20 so that the acoustic datum may be stored in the appropriate acoustic database. The second identifier may be used to identify the narrator 22 when an incoming text message is received by the controller 20 so that the appropriate acoustic database may be used by the text-to-speech processor to generate an audio signal from the text message.

The controller 20 may be configured to determine a confidence level for the word indicative of an estimated level of accuracy for which the text string is determined from the speech sample and discard the word when the confidence level is below a confidence threshold. When the confidence level is below the threshold, the acoustic datum based on the text string and the word is not stored in the acoustic database.

The controller 20 may be configured to also store the confidence level for the word within the acoustic database. If the controller 20 later recognizes the same word with a higher confidence score, the controller 20 may replace the acoustic datum currently stored in the database with the new acoustic datum that received the higher confidence score. This may provide the advantage of improving the quality of the acoustic data stored within the acoustic database as the system 10 is used.

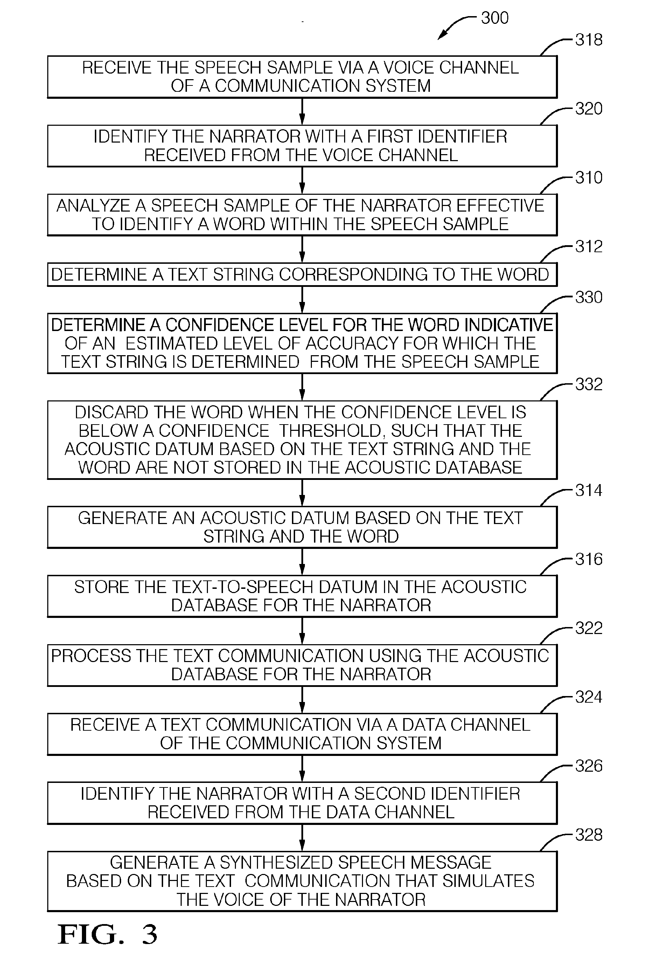

Fig. 3 illustrates a method 300 of generating an acoustic database for a particular narrator that does not require the narrator to recite a pre-defined script. The method 300 may include the following steps.

Step 310, ANALYZE A SPEECH SAMPLE OF THE NARRATOR EFFECTIVE TO IDENTIFY A WORD WITHIN THE SPEECH SAMPLE, may include analyzing a speech sample of the narrator effective to identify a word within the speech sample. The speech sample may be analyzed by a speaker-independent speech-to-text processor.

Step 312, DETERMINE A TEXT STRING CORRESPONDING TO THE WORD, may include determining a text string corresponding to the word. The determination of the text string may be made by a controller running a speech-to-text processor. As used herein a speech-to-text processor that is a software algorithm capable of converting speech to text.

Step 314, GENERATE AN ACOUSTIC DATUM BASED ON THE TEXT STRING AND THE WORD, may include generating an acoustic datum based on the text string and the word. The acoustic datum may comprise at least one of diphones, allophones, and triphones.

Step 316, STORE THE TEXT-TO-SPEECH DATUM IN THE ACOUSTIC DATABASE FOR THE NARRATOR, may include storing the text-to-speech datum in the acoustic database for the particular narrator creating the speech sample.

Step 318, RECEIVE THE SPEECH SAMPLE VIA A VOICE CHANNEL OF A COMMUNICATION SYSTEM, may include receiving the speech sample via a voice channel of a communication system. The communication system may be a cellular telephone network. The voice channel may be characterized as a duplex channel having a send direction and a receive direction, wherein the speech sample is recorded from the receive direction of the voice channel. The send direction and receive direction may be referenced relative to a transceiver that receives the speech sample.

Step 320, IDENTIFY THE NARRATOR WITH A FIRST IDENTIFIER RECEIVED FROM THE VOICE CHANNEL, may include identifying the narrator with a first identifier received from or associated with the voice channel. The first identifier may comprise a telephone number.

Step 322, RECEIVE A TEXT COMMUNICATION VIA A DATA CHANNEL OF THE COMMUNICATION SYSTEM, may include receiving a text communication via a data channel of the communication system. The communication system may be a cellular telephone network.

Step 324, IDENTIFY THE NARRATOR WITH A SECOND IDENTIFIER RECEIVED FROM THE DATA CHANNEL, may include identifying the narrator with a second identifier received from or associated with the data channel. The second identifier may comprise a telephone number.

Step 326, PROCESS THE TEXT COMMUNICATION USING THE ACOUSTIC DATABASE FOR THE NARRATOR, may include processing the text communication using the acoustic database for the narrator. The text communication may be processed by a controller including a text-to-speech processor.

Step 328, GENERATE A SYNTHESIZED SPEECH MESSAGE BASED ON THE TEXT COMMUNICATION THAT SIMULATES THE VOICE OF THE NARRATOR, may include generating a synthesized speech message based on the text communication that simulates the voice of the narrator.

Step 330, DETERMINE A CONFIDENCE LEVEL FOR THE WORD INDICATIVE OF AN ESTIMATED LEVEL OF ACCURACY FOR WHICH THE TEXT STRING IS DETERMINED FROM THE SPEECH SAMPLE, may include determining a confidence level for the word indicative of an estimated level of accuracy for which the text string is determined from the speech sample.

Step 332, DISCARD THE WORD WHEN THE CONFIDENCE LEVEL IS BELOW A CONFIDENCE THRESHOLD, SUCH THAT THE ACOUSTIC DATUM BASED ON THE TEXT STRING AND THE WORD ARE NOT STORED IN THE ACOUSTIC DATABASE, may include discarding the word when the confidence level is below a confidence threshold, such that the acoustic datum based on the text string and the word are not stored in the acoustic database.

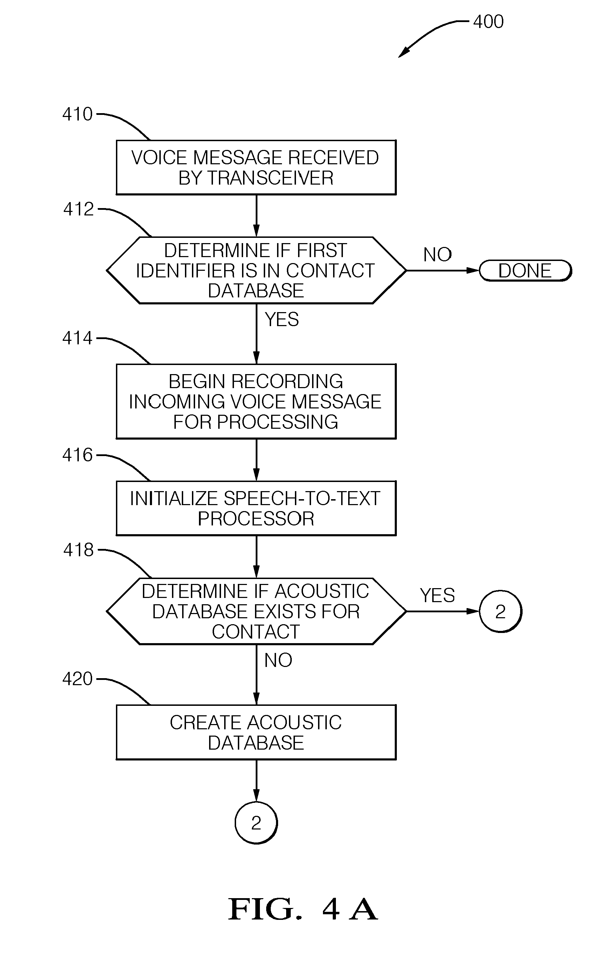

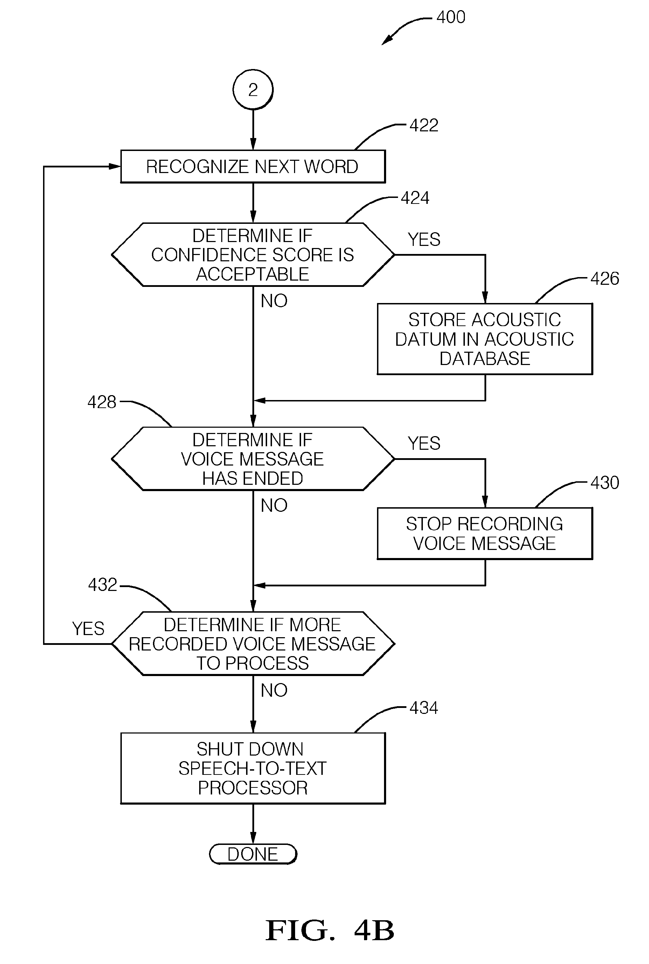

Figs. 4A and 4B illustrates a non-limiting example of a method 400 to create and update the acoustic database from a voice message received by the transceiver. The method 400 may include the following steps.

Step 410, VOICE MESSAGE RECEIVED BY TRANSCEIVER, may include receiving a voice message from the narrator, for example via a cellular telephone call. The method 400 then proceeds to step 412.

Step 412, DETERMINE IF FIRST IDENTIFIER IS IN CONTACT DATABASE, may include determining whether the first identifier associated with the voice message is contained within the contact database. The contact database may include a plurality of first identifiers, such as a list of telephone numbers. If the first identifier is not found in the contact database, the method 400 ends. If the first identifier is found within the contact database, the method 400 proceeds to step 414.

Step 414, BEGIN RECORDING INCOMING VOICE MESSAGE FOR PROCESSING, may include recoding the incoming voice message for processing by the speech-to-text processor. The incoming voice message may be stored in a memory device for processing after receipt of the message or the voice message may be processed simultaneously or near-simultaneously with receipt of the voice message. The method 400 then proceeds to step 416.

Step 416, INITIALIZE SPEECH-TO-TEXT PROCESSOR, may include initializing the speech-to-text processor to recognize a word within the voice message. Step 416 may include loading instructions from memory to a controller and initiating processing of the instructions. The method 400 then proceeds to step 418.

Step 418, DETERMINE IF ACOUSTIC DATABASE EXISTS FOR CONTACT, may include determining if an acoustic database associated with the first identifier already exists. If an acoustic database associated with the first identifier does not exist, the method 400 proceeds to step 420. If an acoustic database associated with the first identifier does exist, the method 400 proceeds to step 422.

Step 420, CREATE ACOUSTIC DATABASE, may include creating an acoustic database in which to store acoustic data associated with the first identifier. The method 400 then proceeds to step 422.

Step 422, RECOGNIZE NEXT WORD, may include recognizing the next word in the voice message via the speech-to-text processor. The method 400 then proceeds to step 424.

Step 424, DETERMINE IF CONFIDENCE SCORE IS ACCEPTABLE, may include determining whether the confidence score for the word calculated by the speech-to-text processor exceeds a threshold for an acceptable confidence score. If the confidence score exceeds the threshold, the method 400 proceeds to step 426. If the confidence score does not exceed the threshold, the method 400 proceeds to step 428.

Step 426, STORE ACOUSTIC DATUM IN ACOUSTIC DATABASE, may include storing the acoustic datum in the acoustic database. The method 400 then proceeds to step 428.

Step 428, DETERMINE IF VOICE MESSAGE HAS ENDED, may include determining whether the voice message has ended. If the voice message has ended, the method 400 proceeds to step 430. If the voice message has not ended, the method 400 proceeds to step 432.

Step 430, STOP RECORDING VOICE MESSAGE, may include stopping the recording of the voice message received from the transceiver. The method 400 then proceeds to step 432.

Step 432, DETERMINE IF MORE RECORDED VOICE MESSAGE TO PROCESS, may include determining whether there is any remaining portion of the voice message than still needs to be processed by the speech-to-text processor. If it is determined that there is a portion of the voice message remaining to process, the method 400 returns to step 422. If it is determine that there is no portion of the voice message remaining to process, the method 400 proceeds to step 434.

Step 434, SHUT DOWN SPEECH-TO-TEXT PROCESSOR, may include terminating the speech-to-text processor software. Step 434 may be a terminal step of the method 400.

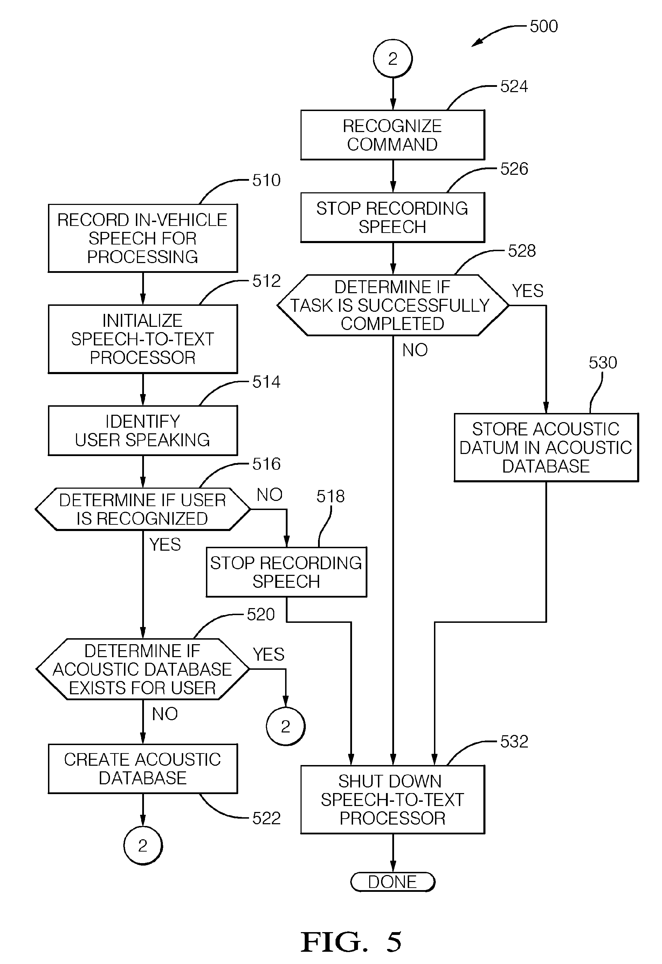

Fig. 5 illustrates a non-limiting example of a method 500 to create and update the acoustic database from in-vehicle command and control recognition. This method may be used to create an acoustic database for a particular narrator, for example, for the driver of the vehicle, without a pre-defined script by gathering speech samples from the driver when the driver interfaces with a voice command system in the vehicle. As a non-limiting example, when giving verbal commands to a vehicle system using voice control, such as a voice controlled audio system or navigation system, the driver's voice may be analyzed and used to create and update the acoustic database. The acoustic database may be created or updated upon completion of the verbal command by the voice command system. The method 500 may include the following steps.

Step 510, RECORD IN-VEHICLE SPEECH FOR PROCESSING, may include recording in-vehicle speech, for example from verbal commands given to a vehicle control system for processing, such as a voice controlled navigation system. The method 500 then proceeds to step 512.

Step 512, INITIALIZE SPEECH-TO-TEXT PROCESSOR, may include initializing the speech-to-text processor to recognize a word within the voice message. The method 500 then proceeds to step 514.

Step 514, IDENTIFY USER SPEAKING, may include identifying the user who is speaking. This step may be accomplished by a speaker identification algorithm. Alternatively, the user may be identified by determining which user profile is active. The user profile may be activated by use of a personalized key fob. The method 500 then proceeds to step 516.

Step 516, DETERMINE IF USER IS RECOGNIZED, may include determining whether the user is recognized. If the user is not recognized, the method 500 proceeds to step 518. If the user is recognized, the method 500 proceeds to step 520.

Step 518, DETERMINE IF ACOUSTIC DATABASE EXISTS FOR USER, may include determining if an acoustic database associated with the user already exists. If an acoustic database associated with the user does not exist, the method 500 proceeds to step 522. If an acoustic database associated with the user does exist, the method 500 proceeds to step 524.

Step 522, CREATE ACOUSTIC DATABASE, may include creating an acoustic database in which to store acoustic data associated with the user. The method 500 then proceeds to step 524.

Step 524, RECOGNIZE COMMAND, may include recognizing the command. The method 500 them proceeds to step 526.

Step 526, STOP RECORDING SPEECH, may include stopping recording of the speech. The method 500 then proceeds to step 528.

Step 528, DETERMINE IF TASK IS SUCCESSFULLY COMPLETED, may include determining whether the task commanded by the user has been successfully completed, such as a task commanded to be performed by a voice controlled radio in a vehicle. If the task has been successfully completed, the method 500 proceeds to step 530. If the task has not been successfully completed, the method 500 proceeds to step 532.

Step 530, STORE ACOUSTIC DATUM IN ACOUSTIC DATABASE, may include storing the acoustic datum in the acoustic database. The method 500 then proceeds to step 532.

Step 532, SHUT DOWN SPEECH-TO-TEXT PROCESSOR, may include terminating the speech-to-text processor software process. Step 532 may be a terminal step of the method 500.

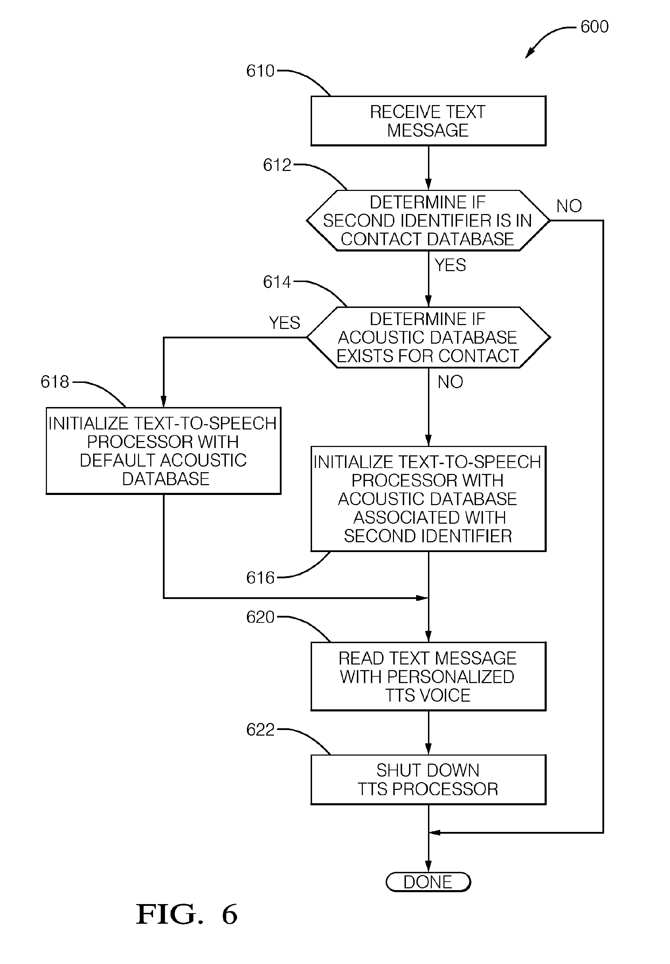

Fig. 6 illustrates a non-limiting example of a method 600 to provide a personalized voice for an incoming text message. The method 600 may include the following steps.

Step 610, RECEIVE TEXT MESSAGE, may include receiving a text message. The text message may be received via a communication system, such as a cellular telephone network. The method 600 then proceeds to step 612.

Step 612, DETERMINE IF SECOND IDENTIFIER IS IN CONTACT DATABASE, may include determining whether the second identifier associated with the incoming text message is contained in a contact database. The second identifier may be a cellular telephone number. If the second identifier is not contained in the contact database, the method 600 is terminated. If the second identifier is contained in the contact database, the method 600 proceeds to step 614.

Step 614, DETERMINE IF ACOUSTIC DATABASE EXISTS FOR CONTACT, may include determining if an acoustic database associated with the second identifier already exists. If an acoustic database associated with the first identifier does exist, the method 600 proceeds to step 616. If an acoustic database associated with the second identifier does not exist, the method 600 proceeds to step 618.

Step 616, INITIALIZE TEXT-TO-SPEECH PROCESSOR WITH ACOUSTIC DATABASE ASSOCIATED WITH SECOND IDENTIFIER, may include initializing the text-to-speech processor with acoustic database associated with the second identifier. The method 600 then proceeds to step 620.

Step 618, INITIALIZE TEXT-TO-SPEECH PROCESSOR WITH DEFAULT ACOUSTIC DATABASE, may include initializing the text-to-speech processor with a default acoustic database. The default acoustic database may contain acoustic data for a narrator that was created using a pre-defined script and is not updated. The method 600 then proceeds to step 620.

Step 620, READ TEXT MESSAGE WITH PERSONALIZED TTS VOICE, may include providing an audio output of the contents of the text message by processing the text message using the text-to-speech processor and the acoustic database associated with the second identifier. The method 600 then proceeds to step 622.

Step 622, SHUT DOWN TTS PROCESSOR, may include terminating the text-to-speech processor software process. Step 622 may be a terminal step of the method 600.

Accordingly, a speech processing system 10, a method 300 of generating an acoustic database for a particular narrator without the narrator 22 reciting a pre-defined script is provided, a method 400 to create and update an acoustic database from a voice message received by a transceiver 16, a method 500 to create and update an acoustic database from in-vehicle command and control recognition, and a method 600 to provide a personalized voice for an incoming text message. The system 10 and methods 300, 400, 500, 600 provide the benefit generating an acoustic database that may be used with a speech-to-text processor to simulate the voice of a narrator without requiring the narrator to read a pre-defined script. The system 10 and methods 300, 400, 500, 600 may also beneficially provide the content of a text message in an audio output using a voice of a narrator that is familiar to a user of the system 10 or methods 300, 400, 500, 600 allowing the user to identify the sender of the text message by the sound of the narrator's voice. The system 10 and methods 300, 400, 500, 600 may also provide the advantage of improving the quality of the acoustic data stored within the acoustic database as the system 10 is used by replacing data in the acoustic database with data having a higher confidence score.

While this invention has been described in terms of the preferred embodiments thereof, it is not intended to be so limited, but rather only to the extent set forth in the claims that follow. Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items.

## Claims

1. A method (300) of generating an acoustic database for a particular narrator (22) that does not require said narrator (22) to recite a pre-defined script, said method (300) comprising the steps of:
analyzing a speech sample of said narrator (22) effective to identify a word within the speech sample;
determining a text string corresponding to said word;
generating an acoustic datum based on said text string and said word; and
storing said acoustic datum in said acoustic database for said narrator (22).

2. The method (300) of claim 1, said method (300) further including the steps of:
receiving said speech sample via a voice channel of a communication system (40); and
identifying said narrator (22) with a first identifier received from said voice channel.

3. The method (300) of claim 2, said method (300) further including the steps of:
receiving a text communication via a data channel of the communication system (40);
identifying said narrator (22) with a second identifier received from the data channel;
processing the text communication using said acoustic database for said narrator (22); and
generating a synthesized speech message based on the text communication that simulates the voice of said narrator (22).

4. The method (300) of claim 3, wherein said first identifier and said second identifier comprises a telephone number.

5. The method (300) of claim 3, wherein said communication system (40) is a cellular telephone network.

6. The method (300) of claim 2, wherein said communication system (40) is a cellular telephone network.

7. The method (300) of claim 2, wherein said voice channel is characterized as a duplex channel having a send direction (42) and a receive direction (44), wherein said speech sample is recorded from the receive direction (44) of said voice channel.

8. The method (300) of claim 1, said method (300) further including the steps of:
determining a confidence level for said word indicative of an estimated level of accuracy for which the text string is determined from the speech sample; and
discarding said word when the confidence level is below a confidence threshold, such that the acoustic datum based on said text string and said word are not stored in said acoustic database.

9. The method (300) of claim 1, wherein said speech sample is analyzed by a speaker-independent speech-to-text processor.

10. The method (300) of claim 1, wherein said acoustic datum comprises at least one of diphones, allophones, and triphones.

11. A speech processing system (10) configured to generate an acoustic database for a particular narrator (22) without the narrator (22) reciting a pre-defined script, said system (10) comprising:
a controller (20) configured to analyze a speech sample of said narrator (22) effective to
identify a word within the speech sample,
determine a text string corresponding to said word,
generate an acoustic datum based on said text string and said word, and store said acoustic datum in said acoustic database for said narrator (22).

12. The system (10) of claim 11, said system (10) further including a transceiver (16) configured to receive said speech sample via a voice channel of a communication system (40), wherein said controller (20) is configured to identify said narrator (22) with a first identifier received from said voice channel.

13. The system (10) of claim 12, wherein said transceiver (16) is configured to receive a text communication via a data channel of the communication system (40), wherein said controller (20) is configured to identify said narrator (22) with a second identifier received from the data channel and process the text communication using said acoustic database for said narrator (22), effective to generate a synthesized speech message based on the text communication that simulates the voice of said narrator (22).

14. The system (10) of claim 13 wherein said first identifier and said second identifier comprises a telephone number.

15. The system (10) of claim 13, wherein said transceiver (16) is a cellular telephone transceiver and wherein said communication system (40) is a cellular telephone network.

16. The system (10) of claim 12, wherein said transceiver (16) is a cellular telephone transceiver and wherein said communication system (40) is a cellular telephone network.

17. The system (10) of claim 12, wherein said voice channel is characterized as a duplex channel having a send direction (42) and a receive direction (44), wherein said speech sample is recorded from the receive direction (44) of said voice channel.

18. The system (10) of claim 11, wherein said controller (20) is configured to determine a confidence level for said word indicative of an estimated level of accuracy for which the text string is determined from the speech sample and discard said word when the confidence level is below a confidence threshold, such that the acoustic datum based on said text string and said word are not stored in said acoustic database.

19. The system (10) of claim 11, wherein said controller (20) is characterized as a speaker-independent speech-to-text processor.

20. The system (10) of claim 11, wherein said acoustic datum comprises at least one of diphones, allophones, and triphones.
